**Europäisches Patentamt**

**European Patent Office**

**Office européen des brevets**

(19)

(11) Veröffentlichungsnummer: **0 256 465**
**B1**

(12) **EUROPÄISCHE PATENTSCHRIFT**

(45) Veröffentlichungstag der Patentschrift:
19.07.89

(51) Int. Cl.⁴: **F16C 13/00**

(21) Anmeldenummer: **87111526.7**

(22) Anmeldetag: **10.08.87**

(54) Deformationsregelwalze.

(30) Priorität: 20.08.86 DE 3628277
27.09.86 DE 3632906

(43) Veröffentlichungstag der Anmeldung:
24.02.88 Patentblatt 88/8

(45) Bekanntmachung des Hinweises auf die Patenterteilung:
19.07.89 Patentblatt 89/29

(84) Benannte Vertragsstaaten:
AT BE CH FR GB IT LI NL SE

(56) Entgegenhaltungen:
DE-A- 3 325 385
DE-B- 2 254 392
FR-A- 2 441 087
GB-A- 2 102 535

(73) Patentinhaber: **Kleinewefers GmbH,**
**Kleinewefersstrasse 25, D-4150 Krefeld 1(DE)**

(72) Erfinder: **Pav, Josef, Dr., Eichhornweg 36c,**
**D-4150 Krefeld(DE)**
Erfinder: **Wenzel, Reinhard, Glindholzstrasse 19,**
**D-4150 Krefeld(DE)**

(74) Vertreter: **Knoblauch, Ulrich, Dr.-Ing.,**
**Kühhornshofweg 10, D-6000 Frankfurt am Main 1(DE)**

**Beschreibung**

Die Erfindung bezieht sich auf eine Deformationsregelwalze mit einem drehfest gehaltenen Träger, auf dem ein ihn umgebender drehbarer Walzenmantel mit Hilfe einer insbesondere hydrostatische Lagerelemente aufweisenden Stützvorrichtung gelagert ist, wobei die Enden des Walzenmantels über Ringlagern auf Lagerbuchsen angeordnet sind, die gegenüber dem Träger beweglich, aber mit Hilfe von an der Lagerbuchse angreifenden Drehmomentstützen gegen Drehung gesichert sind.

Derartige Deformationsregelwalzen sind für zahlreiche Anwendungszwecke geeignet, sei es als Druckbehandlungswalze, beispielsweise für Kalander, Glättwerke, Pressenpartien von Papier-, Zellstoff- und Druckmaschinen oder Walzwerke für Stahl, Kunststoff u.dgl, sei es als Umlenkwalze, wie sie für Siebe, Textilbahnen u.dgl. benutzt wird. Bei ihnen kann die Form der Walze durch Regelung oder Steuerung der der Stützvorrichtung zuzuführenden Stellsignale, beispielsweise des hydrostatischen Drucks, insgesamt oder zonenweise geändert werden.

Eine Deformationsregelwalze dieser Art ist aus DE-OS 33 25 385 bekannt. Die Drehmomentstütze besteht aus einer über Zwischenelemente am Träger drehbar gelagerten Rolle, die in eine Radialnut der Lagerbuchse eingreift. Es können auch zwei Drehmomentstützen zu beiden Seiten des Trägers angeordnet sein. Hierbei befinden sich Rollen und Radialnuten in der Wirkebene, welche durch die Stützvorrichtung definiert ist. Die Drehmomentstützen verhindern ein Verdrehen der Lagerbuchsen, so daß die an ihnen anliegenden Dichtringe nicht beschädigt werden, und erlauben gleichzeitig eine radial Translationsbewegung der Lagerbuchsen und des darauf befindlichen Walzenmantels.

Es sind ferner Deformationsregelwalzen bekannt (DE-AS 22 54 392), bei denen die Lagerbuchse einen fensterartigen Ausschnitt mit zwei parallelen Seitenwänden hat, die auf parallelen Führungsflächen des Trägers gleiten. Hiermit soll der Walzenmantel radial geführt werden.

Wenn in den bekannten Fällen der Walzenmantel zusammen mit der Lagerbuchse, z.B. durch eine entsprechende Druckbeaufschlagung der hydrostatischen Lagerelemente, verstellt werden soll, sind Reibungskräfte zwischen der Lagerbuchse und der Drehmomentstütze bzw. dem Träger zu überwinden. Besonders gravierend ist dies bei Verwendung des fensterartigen Ausschnitts, weil schon bei einem leichten Verkanten der Lagerbuchse ein Verklemmen an diagonal gegenüberliegenden Stellen der Führungsflächen auftritt und erhebliche Losbrechkräfte überwunden werden müssen. Diese Gefahr ist bei den bekannten Drehmomentstützen, insbesondere wenn sie als Rollen ausgebildet sind, wesentlich reduziert. Im Laufe der Betriebszeit kann es aber wegen des Linienkontakts zu erheblichen Hertzschen Pressungen und damit zu Abflachungen an der zylindrischen Oberfläche kommen, so daß auch hier Reibungskräfte, wenn auch in geringerem Maße, zu überwinden sind. Dies beeinträchtigt eine feinfühlige Regelung, insbesondere wenn die Reibungskräfte an beiden Lagerbuchsen unterschiedlich sind.

Der Erfindung liegt die Aufgabe zugrunde, eine Deformationsregelwalze der eingangs beschriebenen Art anzugeben, bei der Reibungskräfte im Bereich der Drehmomentstütze praktisch zu vernachlässigen sind.

Diese Aufgabe wird erfindungsgemäß dadurch gelöst, daß die Drehmomentstützen um etwa 90° gegenüber der Stützvorrichtung versetzt sind und je durch mindestens einen Zapfen mit zur Trägerlängserstreckung paralleler Achse zur Schwenklagerung der Lagerbuchse gebildet sind.

Bei dieser Konstruktion ist die Drehmomentstütze quer zur Wirkebene versetzt und als exzentrisch angeordneter Schwenkzapfen ausgebildet. Infolgedessen ergibt sich keine Translationsbewegung zwischen den Lagerbuchsen mit dem darauf angeordneten Walzenmantel und dem Träger, sondern eine Schwenkbewegung auf einer Kreisbahn. Die Relativbewegung aufeinanderliegender Flächen beschränkt sich auf die zylindrische Oberfläche des Zapfens und die zugehörige Bohrung. Wegen der vergleichsweise großen Kontaktfläche ist keine Hertzsche Pressung zu befürchten. Wegen der Zylinderform ist auch kein Verklemmen möglich. Weil die Schwenkachse einen Abstand von der Wirkebene hat, ergibt sich eine Hebelwirkung derart, daß die bei einem zylindrischen Schwenklager noch verbleibenden Reibungskräfte in der Wirkebene mit einem so geringen Anteil wirksam sind, daß sie praktisch vernachlässigt werden können.

Weil bei einer Verstellung des Walzenmantels keine Losbrech-, Klemm- oder Reibkräfte überwunden werden müssen, also auch keine unterschiedlichen Kräfte an beiden Enden des Walzenmantels zu überwinden sind, ergibt sich eine außerordentlich genaue und feinfühlige Regelung.

Besonders günstig ist es, wenn der Zapfen mit dem Träger drehfest verbunden und die Lagerbuchse um den Zapfen schwenkbar ist. Dies hat gegenüber der Alternative, den Zapfen an der Lagerbuchse anzubringen, den Vorteil, daß der Abstand zwischen der Querschnitts-Mittelebene der Lagerbuchse und dem Zapfen-Gleitlager klein ist. Hierdurch vermindert sich die Gefahr einer unerwünschten Schrägstellung der Achse der Lagerbuchse bei einer Querbelastung, auch wenn der Schwenkzapfen nur an einer Stirnseite der Lagerbuchse vorgesehen ist.

Bei einer bevorzugten Ausführungsform ist dafür gesorgt, daß der Zapfen von einer Stufen-Stirnfläche zwischen dem die Lagerbuchse durchsetzenden Trägerabschnitt und einem dickeren Hauptteil des Trägers vorsteht. An dieser Stelle kann der Träger eine erheblich größere Abmessung haben als in der Wirkebene, weil die Oberfläche nicht zur Aufnahme der Stützvorrichtung bearbeitet sein muß. Es kann daher eine verhältnismäßig große Stufe vorgesehen werden.

Es ist auch möglich, daß der Zapfen von einer am Träger drehfest gehaltenen, axial außerhalb des Ringlagers angeordneten Dichtscheibe vorsteht. Es ist lediglich notwendig, die Dichtscheibe so groß zu gestalten, daß der Zapfen sich an der richtigen Stelle befindet.

Mit besonderem Vorteil ist zu beiden Seiten des Wälzlagers je ein Zapfen in gleichachsiger Anordnung vorgesehen. Dies ergibt eine besonders gute Lagerung, bei der sichergestellt ist, daß bei allen Belastungen die Mittelachse der Lagerbuchse parallel zu ihrer Ausgangslage bleibt.

Dies kann insbesondere dadurch erreicht werden, daß die Lagerbuchse zwei Außenflansche aufweist, von denen der eine einteilig mit ihr ausgebildet und der andere mit ihr durch Befestigungsmittel verbunden ist. Die beiden Außenflansche erlauben es, die Zapfen mit verhältnismäßig großem Abstand von der Mittelachse der Lagerbuchse anzuordnen.

Günstig ist es ferner, daß der Zapfen zu auf einer zur Hubrichtung der Stützvorrichtung etwa parallelen Bahn bewegbar ist. Diese Konstruktion erlaubt es, die Schwenklagerung auch bei Walzenmänteln mit großem Hub anzuwenden. Es ergibt sich eine zweifache Bewegungsfreiheit der Lagerbuchse, so daß sich diese im Betrieb jeweils so einstellen kann, daß ihre Achse in der Wirkebene oder in deren Nähe liegt.

Eine Möglichkeit besteht darin, daß der Zapfen von einem Gleitstein getragen ist, der in einer drehfest am Träger gehaltenen Nut verschiebbar ist, die außermittig etwa parallel zur Hubrichtung der Stützvorrichtung verläuft. Für eine genaue und feinfühlige Regelung genügt es, wenn die reibungsarme Schwenklagerung im Bereich der Arbeitsstellung des Walzenmantels vorhanden ist. Bei großhubigen An- und Abstellbewegungen dagegen wird die Schwenkachse mit Hilfe des Gleitsteins in der Nut verlagert. Auch hierbei kann kein Verklemmen auftreten, da sich der Gleitstein dem Nutverlauf durch Drehung um die Schwenkachse anpassen kann.

Konstruktiv empfiehlt es sich, daß die Nut zur Aufnahme des Gleitsteins in der Stufen-Stirnfläche des Trägers und/oder in der Dichtscheibe vorgesehen ist. Wählt man auf beiden Seiten des Lagers eine Nut, ergibt sich eine besonders sichere Verschiebebewegung der Gleitsteine.

Eine andere bevorzugte Alternative besteht darin, daß der Zapfen von einem Hebel getragen ist, der um eine dem Zapfen diametral gegenüberliegende trägerfeste Achse eines zweiten Zapfens schwenkbar ist. Das Schwenken um den zweiten Zapfen erfolgt genauso reibungsarm wie das Schwenken um den ersten Zapfen. Es ergibt sich eine Art Scherenbewegung, die sowohl eine Hubbewegung als auch eine Ausrichtung der Lagerbuchse auf die Wirkebene erlaubt.

Zweckmäßigerweise ist der Hebel zwischen einer Stirnseite der Lagerbuchse und einer Stufen-Stirnfläche des Trägers und/oder der Stirnfläche der Dichtscheibe angeordnet. Dort nimmt der Hebel wenig Platz ein, kann aber trotzdem eine radial große Breite und daher eine entsprechende Stabilität erhalten.

Mit besonderem Vorzug ist der Hebel durch einen Ring gebildet, der einen ihn durchsetzenden Trägerabschnitt mit einem solchen Spiel umgibt, daß der maximale Ringhub kleiner als der maximale Lagerbuchsenhub ist. Die Ringform führt zu einer besonders großen Stabilität des Hebels. Sie ermöglicht ferner eine Hubbegrenzung. Hierdurch wird auch unter ungünstigen Umständen sichergestellt, daß bei größeren Hüben sowohl der Ring als auch die Lagerbuchse eine Schwenkbewegung ausführen, wie dies angestrebt wird, damit die Lagerbuchsenachse im Bereich der Wirkebene bleibt.

In weiterer Ausgestaltung ist dafür gesorgt, daß die Lagerbuchse wenigstens an einer Seite einen axial vorspringenden Rand aufweist, der den Ring mit einem solchen Spiel umgibt, daß der maximale Relativhub zwischen Lagerbuchse und Ring kleiner als der maximale Lagerbuchsenhub ist. Auch dies ergibt eine Hubbegrenzung, die gewährleistet, daß bei größeren Hüben sowohl der Ring als auch die Lagerbuchse verschwenkt werden.

Günstig ist es hierbei, daß die Summe von maximalem Ringhub und maximalem Relativhub größer ist als der maximale Lagerhub. In der Ruhestellung, wenn kein hydrostatischer Druck vorhanden ist, wird die Lagerbuchse unmittelbar auf dem Träger abgestützt.

Besondere Vorteile bietet eine am Walzenmantel und/oder an der Lagerbuchse angreifende, hydrostatische Stabilisierungsvorrichtung mit in Richtung der Stützvorrichtung wirkenden Primärelementen und in Gegenrichtung wirkenden Sekundärelementen, die durch ihre Spannwirkung zumindest eine unzulässig große Querverlagerung des Walzenmantels verhindern. Mit Hilfe der Primär- und Sekundärelemente können auf den Walzenmantel wirkende Querkräfte aufgenommen werden. Der Schwenkzapfen kann hierdurch von Querkräften entlastet werden, was wiederum der reibungsarmen Verschwenkung zugute kommt. In Verbindung mit der Gleitsteinlagerung führen die Stabilisierungselemente zu einem automatischen Nachführen des Gleitsteins. Denn mit zunehmendem Schwenkwinkel steigen die von der Stabilisierungsvorrichtung auf den Walzenmantel ausgeübten Querkräfte an, bis schließlich der Gleitstein von Querkräften ganz oder nahezu entlastet ist und sich daher in der Nut verstellt.

Im einfachsten Fall dienen die hydrostatischen Lagerelemente der Stützvorrichtung als Primärelemente. Sie können eine in Umfangsrichtung so große Abmessung haben, daß sie zur Aufnahme von Querkräften geeignet sind. Besonders günstig ist es, wenn sie von mindestens zwei in Umfangsrichtung versetzten, je aus Kolben und Zylinder bestehenden Druckgebern belastet werden. Solche Lagerelemente sind beispielsweise aus DE-PS 30 22 491 bekannt.

Im allgemeinen genügt es, wenn die Primärelemente Querkräfte aufnehmen können, während die Sekundärelemente lediglich dazu dienen, die angestrebte Spannwirkung zu erzielen. Es besteht aber auch die Möglichkeit, daß die Sekundärelemente durch in Gegenrichtung am Walzenmantel angreifende hydrostatische Lagerelemente gebildet sind. Diese vermögen ebenso wie die Primärelemente Querkräfte aufzunehmen.

Eine Alternative besteht darin, daß zumindest als Sekundärelement eine Kolben-Zylinder-Anordnung zwischen Lagerbuchse und dem sie durchsetzenden Trägerabschnitt angeordnet ist. Diese Konstruktion hat den Vorteil, daß keine relative Drehung zwischen der Lagerbuchse und dem Primär- oder Sekundärelement auftritt. Die Lagerbuchse kann sogar mit Teilen der Kolben-Zylinder-Anordnung verbunden werden.

Insbesondere kann ein an der Lagerbuchse fest angebrachter Kolben mit großem Spiel in eine Zylinderbohrung im Trägerabschnitt greifen. Das große Spiel sorgt dafür, daß die Schwenkbewegung der Lagerbuchse nicht durch eine Führung des Kolbens in der Zylinderbohrung behindert wird.

In weiterer Ausgestaltung der Erfindung ist dafür gesorgt, daß an mindestens einer Stirnseite der Lagerbuchse Gleitelemente vorgesehen sind, deren Gesamtfläche erheblich kleiner ist als die stirnseitige Fläche. Auf diese Weise wird die Berührungsfläche mit dem Nachbarteil, beispielsweise der Stufe des Trägers und/oder der Dichtscheibe, herabgesetzt, was ebenfalls zu einer Verminderung der bei einer Verstellung der Lagerbuchse zu überwindenden Reibungskraft führt. Außerdem können die Gleitelemente aus einem Material mit verbesserten Gleiteigenschaften, beispielsweise Bronze, bestehen. Daneben sind die fein zu bearbeitenden Flächen an Gleitelementen und Nachbarteilen kleiner, was Kosten einspart.

Insbesondere kann ein Gleitelement durch einen den Zapfen umgebenden Ring gebildet sein. Man benötigt dann keine speziellen Befestigungselemente.

Einer Stirnseite sollten möglichst drei um etwa 120° gegeneinander versetzte Gleitelemente zugeordnet sein. Dies ergibt eine Drei-Punkt-Abstützung und daher ein hohes Maß an Stabilität.

Vorzugsweise sind die zwischen Lagerbuchse und Dichtscheibe vorgesehenen Gleitelemente innerhalb des zwischen diesen Teilen befindlichen Dichtringes angeordnet. Die Gleitelemente können daher noch mit dem im Innern des Walzenmantels vorhandenen Öl geschmiert sein. Außerdem sorgen die Gleitelemente dafür, daß der Dichtring nicht belastet ist, sondern allein mit Rücksicht auf seine Dichtfunktion ausgelegt werden kann.

Die Erfindung wird nachstehend anhand in der Zeichnung dargestellter, bevorzugter Ausführungsbeispiele näher erläutert. Es zeigen:

Fig. 1 einen Längsschnitt durch den Endbereich einer erfindungsgemäßen Deformationsregelwalze gemäß der Linie A-A in Fig. 2,
Fig. 2 einen Querschnitt längs der Linie B-B in Fig. 1,
Fig. 3 einen Schnitt längs der Linie C-C in Fig. 1,
Fig. 4 einen Längsschnitt durch den Endbereich einer abgewandelten Ausführungsform,
Fig. 5 einen Längsschnitt durch den Endbereich einer weiteren Ausführungsform,
Fig. 6 einen Querschnitt längs der Linie D-D in Fig. 5,
Fig. 7 einen Längsschnitt durch den Endbereich einer vierten Ausführungsform,
Fig. 8 einen Querschnitt längs der Linie E-E in Fig. 7,
Fig. 9 einen Längsschnitt durch den Endbereich einer fünften Ausführungsform,

Fig. 10 einen Querschnitt längs der Linie F-F der Fig. 10,
Fig. 11 den gleichen Querschnitt bei abgesenkter Lagerbuchse und
Fig. 12 einen Querschnitt längs der Linie G-G der Fig. 9 bei abgesenkter Lagerbuchse.

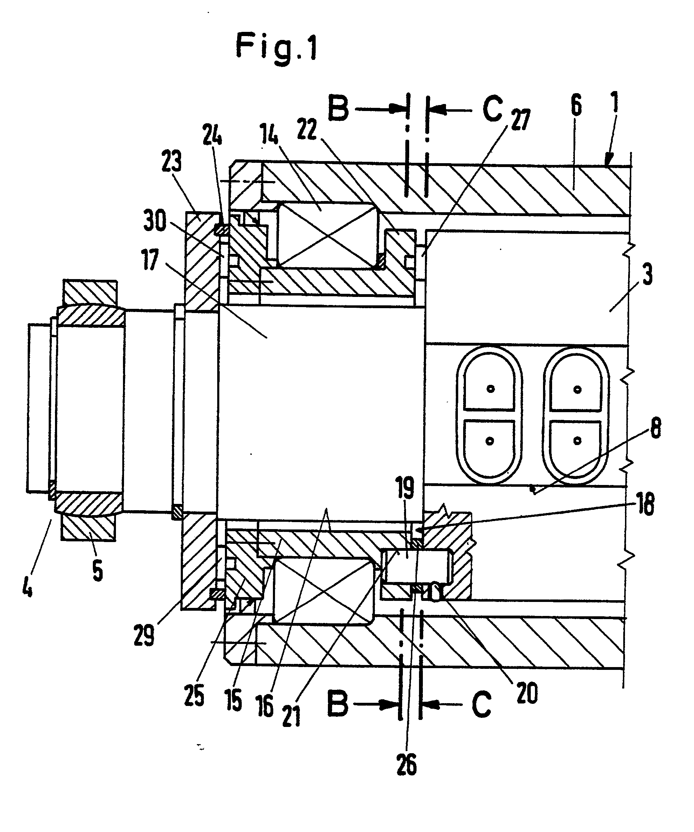

Bei der Ausführungsform der Fig. 1 bis 3 besitzt die Deformationsregelwalze 1, die mit einer Gegenwalze 2 zusammenwirken kann, einen Träger 3, der an beiden Enden über ein Schwenklager 4 drehfest in einem Ständer 5 gehalten ist. Ein Walzenmantel 6 umgibt drehbar den Träger 3 und ist auf ihm mittels einer Stützvorrichtung 8 gelagert. Diese Stützvorrichtung weist axial nebeneinander angeordnete Lagerelemente 9 auf, welche durch je zwei in Umfangsrichtung versetzte Druckgeber 10 und 11, die je aus einem Kolben am Träger 3 und einer Zylinderbohrung im Lagerelement 9 bestehen, belastet sowie mit Drucktaschen 12 und 13 zur hydrostatischen Mantellagerung versehen sind. Wegen weiterer Einzelheiten dieser hydrostatischen Lagerung wird auf DE-PS 30 22 491 verwiesen.

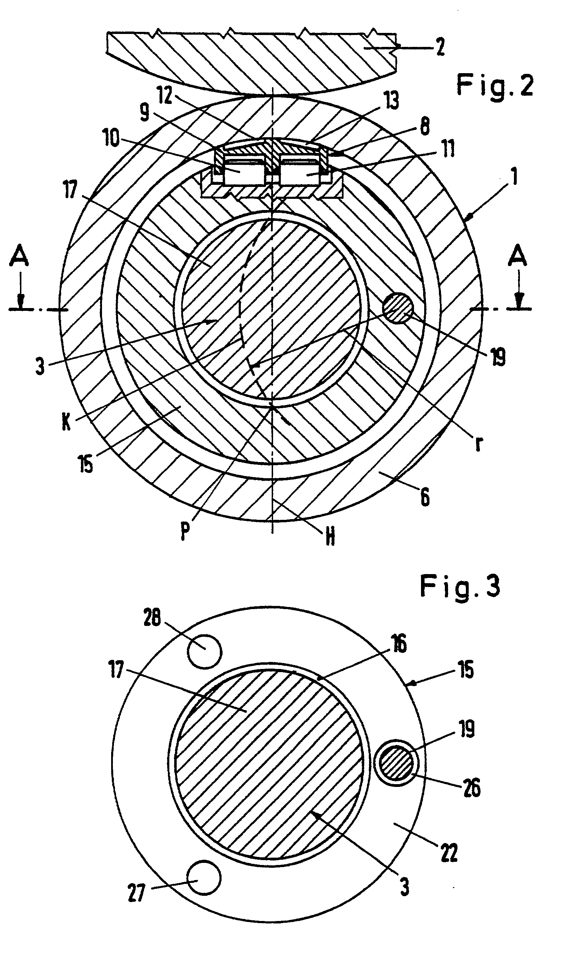

Desweiteren sind die Enden des Walzenmantels 6 über je ein Wälzlager 14 auf einer Lagerbuchse 15 abgestützt, deren zylindrische Mittelöffnung 16 einen zylindrischen Trägerabschnitt 17 mit vermindertem Durchmesser umgibt. Daher weist der Träger 3 an der Übergangsstelle eine Stufe 18 auf. Diese Stufe hat in der Schnittebene A-A der Fig. 2 eine größere radiale Breite als im Bereich der durch den Spalt zwischen den Walzen 1 und 2 bestimmten Wirkebene H, weil der Träger 3 zur Anbringung der Stützvorrichtung 8 eine Abflachung aufweist. In einer Bohrung dieser Stufe ist, um etwa 90° gegenüber der Stützvorrichtung 8 versetzt, ein Zapfen 19 befestigt und durch eine Stellschraube 20 gesichert. Dieser Zapfen 19 greift mit Gleitspiel in eine Bohrung 21 der Lagerbuchse 15. Die Bohrung ist in einem Außenflansch 22 untergebracht, der sich seitlich neben dem Wälzlager 14 befindet.

Demzufolge kann die Lagerbuchse 15, wie Fig. 2 zeigt, um den Zapfen 19 geschwenkt werden, und zwar zwischen einer unteren Position, in der die Lagerbuchse 15 oben am Trägerabschnitt 17 anschlägt und einer oberen Position, in der die Lagerbuchse unten am Trägerabschnitt anschlägt. Hierbei bewegen sich alle Teile der Lagerbuchse 15 auf Kreisbogenabschnitten. In Fig. 2 ist ein Kreis K mit dem Radius r angedeutet, auf dem sich über einen bestimmten Abschnitt ein in der Symmetrieebene gelegener Punkt P am Innenumfang der Lagerbuchse 15 bewegt.

Da die Lagerbuchse 15 lediglich um den zylindrischen Zapfen 19 schwenkt, können bei dieser Bewegung keine Verklemmungen auftreten. Eine eventuell verbleibende Reibungskraft an der zylindrischen Zapfenoberfläche ist vernachlässigbar, weil sie sich wegen der Hebelverhältnisse in der Wirkebene H nur noch mit einem Bruchteil ihres Wertes auswirkt. Der Zapfen 19 bildet eine Drehmomentstütze, welche ein Verdrehen der Lagerbuchse 15 verhindert. Infolgedessen ergibt sich nur eine geringfügige Relativbewegung zwischen der Lagerbuchse 15 und einem Dichtring 24, der an einer am Träger 3 drehfest gehaltenen Dichtscheibe 23 angebracht ist.

Die Lagerbuchse 15 besitzt zwei Außenflansche. Der Außenflansch 22 ist einteilig mit der Lagerbuchse ausgebildet. Der Außenflansch 25 ist mit ihr durch nicht veranschaulichte Befestigungsmittel verbunden. An den durch die Außenflansche gebildeten Stirnseiten der Lagerbuchse 15 sind je drei um 120° gegeneinander versetzte Gleitelemente aus einem reibungsarmen Werkstoff, wie Bronze, vorgesehen. Fig. 3 zeigt die drei Gleitelemente 26, 27 und 28 zwischen dem Außenflansch 22 und der Stufe 18 des Trägers 3. Das Gleitelement 26 ist als Ring um den Zapfen 19 gelegt.

Die Gleitelemente 27 und 28 sind als Scheiben am Außenflansch 22 befestigt. Am Außenflansch 25 sind innerhalb des Umfangs der Dichtung 24 drei scheibenförmige Gleitelemente in ähnlicher Verteilung angebracht, von denen die Gleitelemente 29 und 30 in Fig. 1 zu sehen sind. An der Stufe 18 und der Dichtscheibe 23 brauchen lediglich die den Gleitelementen gegenüberliegenden Flächen fein bearbeitet zu werden.

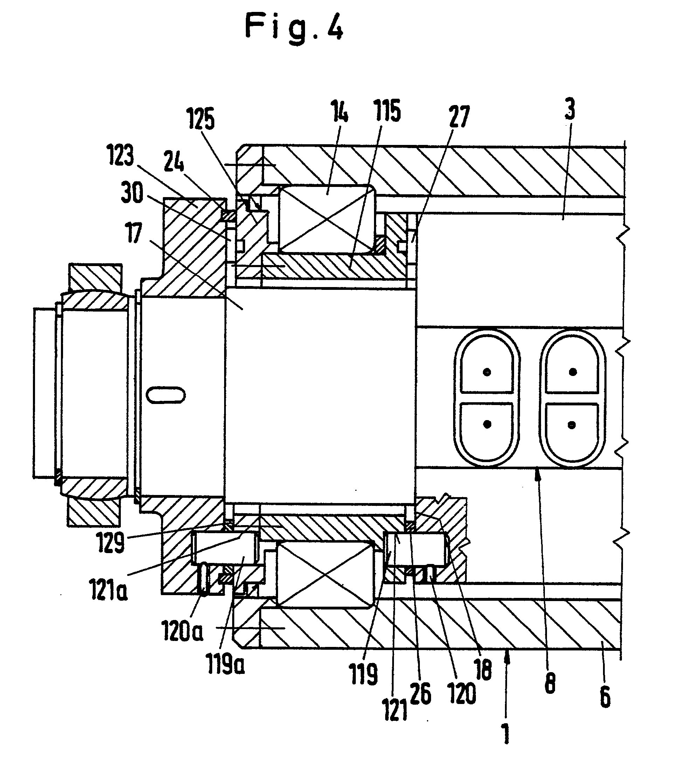

In Fig. 4 werden für gleiche Teile dieselben Bezugszeichen wie in den Fig. 1 bis 3 verwendet. Entsprechende Teile erhalten um 100 erhöhte Bezugszeichen. Die Lagerbuchse 115 ist über zwei gleichachsige Zapfen 119 und 119a schwenkbar gelagert. Der Zapfen 119 ist mit Hilfe einer Stellschraube 120 im Träger befestigt. Der Zapfen 119a ist mittels einer Stellschraube 120a an der Dichtscheibe 123 befestigt, die drehfest mit dem Träger 3 verbunden ist. Der Zapfen 119a greift in eine Bohrung 121a in einem Außenflansch 125 der Lagerbuchse 115, der sich axial außerhalb des Wälzlagers 14 befindet.

Da bei dieser Konstruktion die Lagerbuchse 115 zu beiden Seiten des Wälzlagers 114 schwenkbar gelagert ist, bleibt die Achse dieser Lagerbuchse auch bei extremen Belastungen parallel zu ihrer Ruhelage. Die Zapfenquerschnitte können kleiner gehalten werden, weil sich die aufzunehmenden Kräfte auf zwei Zapfen verteilen.

Die Gleitelemente entsprechen denjenigen der Fig. 1 bis 3; lediglich das Gleitelement 129 ist als den Zapfen 119a umgebener Ring ausgebildet.

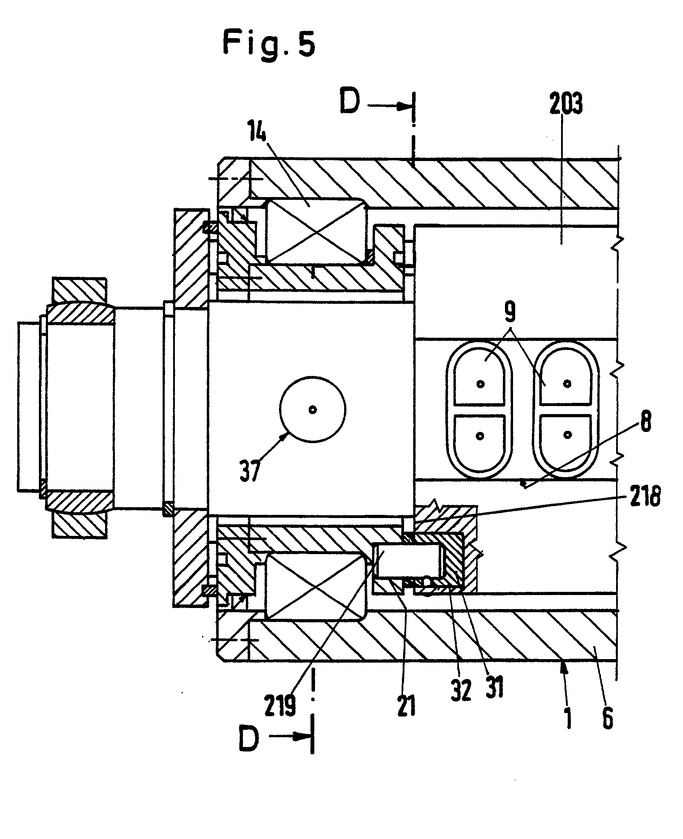

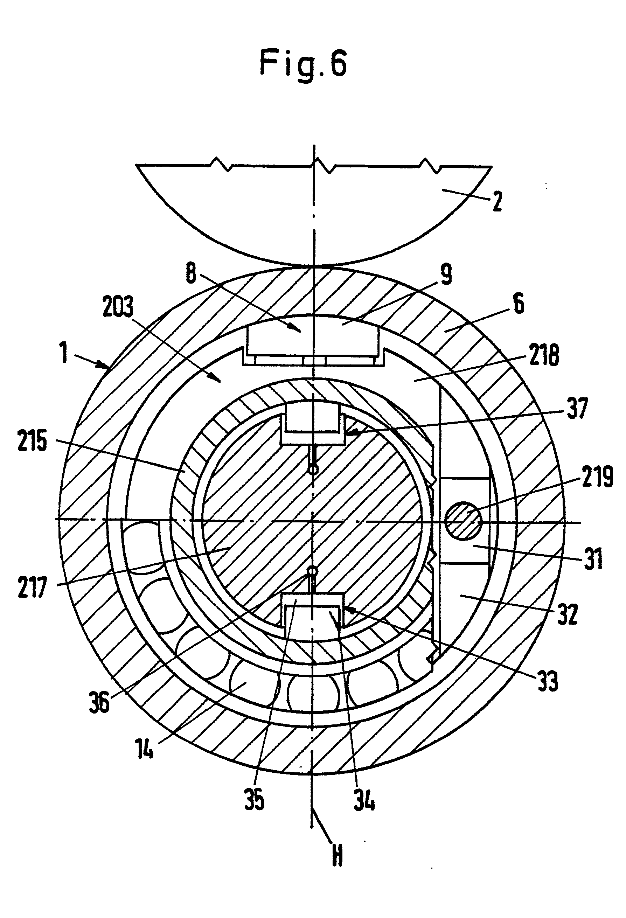

Die Ausführungsform der Fig. 5 und 6 entspricht derjenigen der Fig. 1 bis 3. Für entsprechende Teile werden die gleichen Bezugszeichen verwendet. Bei abgewandelten Teilen ist das Bezugszeichen um 200 erhöht. Unterschiedlich ist es, daß der Zapfen 219 drehfest in einem Gleitstein 31 gehalten ist, der in einer Nut 32 an der Schulter 218 des Trägers 203 verschiebbar ist. Die Nut erstreckt sich außermittig etwa parallel zur Hubrichtung der Stützvorrichtung 8 bzw. der Wirkebene H.

Die Lagerelemente 9 bilden Primärelemente einer hydrostatischen Stabilisierungsvorrichtung, zu der auch in jeder Lagerbuchse 215 ein Sekundärelement 33 gehört, daß in Gegenrichtung wirkt. Es besteht aus einem an der Lagerbuchse 215 befestigten Kolben 34 und einer Zylinderbohrung 35 im Trägerabschnitt 217. Der Zylinderbohrung 35 kann über eine Leitung 36 Druckflüssigkeit mit einstellbarem oder regelbarem Druck zugeführt werden. Das gleiche gilt für ein entsprechendes Primärelement 37, das sich ebenfalls im Bereich der Lagerbuchse 215 befinden kann. Der Kolben 34 hat ein großes Spiel in der Zylinderbohrung 35, damit die Schwenkbewegung der Lagerbuchse 215 um den Zapfen 219 ohne Behinderung erfolgen kann. Es besteht auch die Möglichkeit, mit Hilfe von Sperrventilen die Hubräume von Primär- und Sekundärelement 33, 37 abzusperren, so daß die Enden des Walzenmantels 6 in wählbaren Lagern festgehalten werden können.

In der Arbeitsstellung schwenkt die Lagerbuchse 215 in gleicher Weise um den Zapfen 219, wie dies bei einer ortsfesten Lagerung dieses Zapfens der Fall ist. Wenn aber der Walzenmantel durch die Stützvorrichtung 8 um einen größeren Hub verstellt wird, nimmt die Lagerbuchse über den Zapfen 219 den Gleitstein 31 mit. Wenn sich der Walzenmantel 6 in Querrichtung zu verlagern sucht, üben die Lagerelemente 9 entsprechende Gegen-Querkräfte aus, wobei sie sich an dem trägerfesten Kolben abstützen. Man kann diese Querkräfte erhöhen, indem gleichzeitig die den Primärelementen 9 und den Sekundärelementen 33 zugeführten Drücke erhöht werden. Infolgedessen ist die auf den Zapfen 219 bzw. auf den Gleitstein 31 wirkende Querkraft begrenzt. Mit zunehmendem Schwenkwinkel nimmt die Querkraft am Zapfen bis auf nahe Null ab, worauf sich der Gleitstein 31 frei in der Nut 32 bewegen kann.

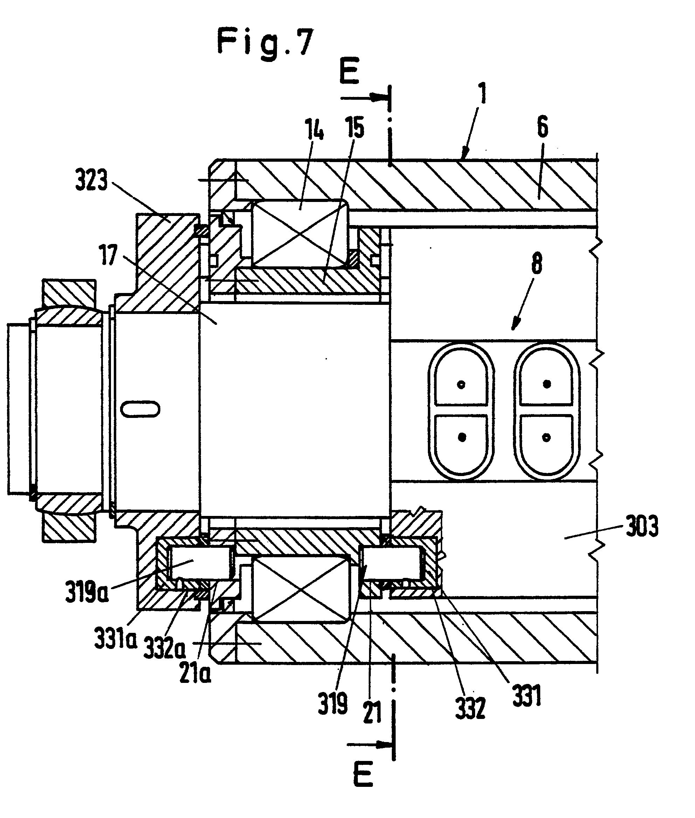

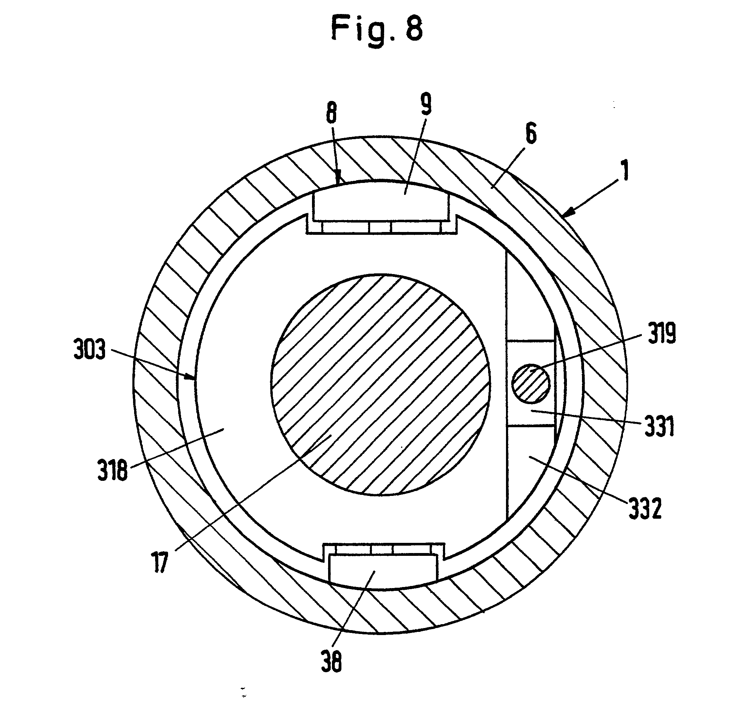

Die Ausführungsform der Fig. 7 und 8 entspricht derjenigen der Fig. 4. Daher werden für gleiche Teile die gleichen Bezugszeichen und für abgewandelte Teile mit 300 beginnende Bezugszeichen verwendet. Unterschiedlich ist im wesentlichen, daß die hydrostatische Stabilisierungsvorrichtung als Primärelemente die Lagerelemente 9 und als Sekundärelemente auf der gegenüberliegenden Seite angeordnete Lagerelemente 38 besitzt. Außerdem sind wieder zwei Zapfen 319 und 319a zu beiden Seiten des Wälzlagers 14 vorgesehen. Sie sind je in einem Gleitstein 331 bzw. 331a arretiert. Der Gleitstein 331 ist in einer Nut 332 im Träger 303 verschiebbar, der Gleitstein 331a in einer Nut 332a in der Dichtscheibe 323. Die beiden Nuten haben den gleichen Verlauf wie die Nut 332 in den Fig. 5 und 6. Auch die Funktion dieser Konstruktion entspricht derjenigen der Fig. 5 und 6.

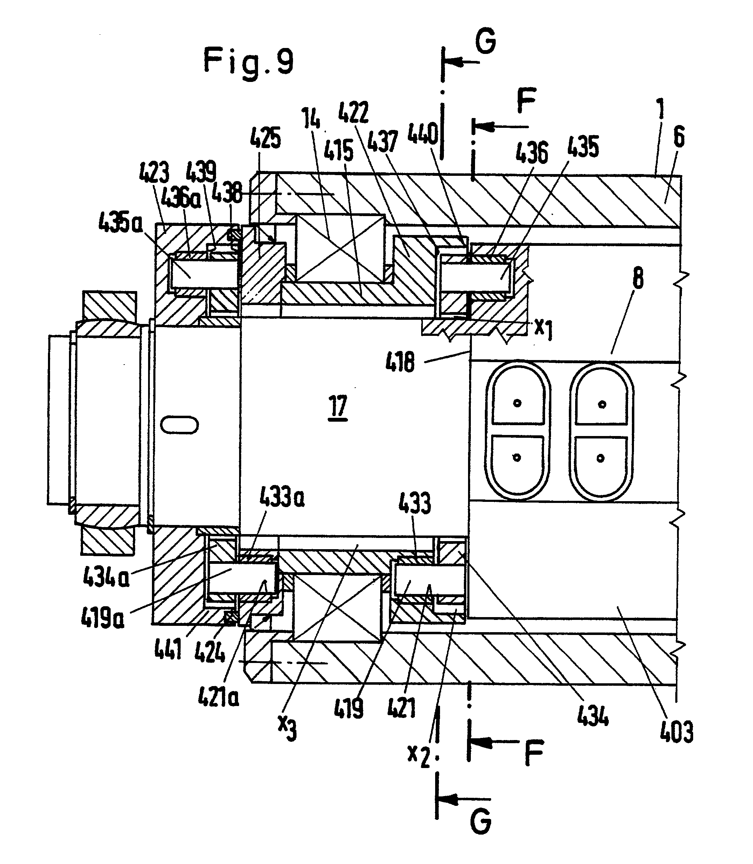

Bei der Ausführungsform der Fig. 9 bis 12 werden für gleiche Teile dieselben Bezugszeichen und für abgewandelte Teile mit 400 beginnende Bezugszeichen verwendet. Bei dieser Konstruktion sind die Zapfen 419 und 419a in Lagerhülsen 433, 433a der Lagerbuchse 415 gelagert. Sie sind fest mit je einem Ring 434, 434a verbunden. Die Ringe bilden Hebel, welche um trägerfeste Achsen von zweiten Zapfen 435, 435a schwenkbar sind. Zu diesem Zweck greift der im Ring 434 befestigte Zapfen 435 in eine Lagerhülse 436 an der Stufenstirnfläche 418 des Trägers 403. Und der am Ring 434a befestigte Zapfen 435a greift in eine Lagerhülse 436a in der drehfest am Träger 403 befestigten Dichtscheibe 423. Der Ring 434 befindet sich zwischen der Stufen-Stirnfläche 418 des Trägers und einer Stirnfläche 437 der Lagerbuchse 415. Der Ring 434a befindet sich zwischen einer Stirnfläche 438 der Lagerbuchse 415 und einer Stirnfläche 439 der

Dichtscheibe 423. Über die Stirnfläche 437 steht ein ringförmiger Rand 440 der Lagerbuchse 415 axial über. Über die Stirnfläche 439 steht ein ringförmiger Rand 441, der die Dichtung 424 trägt, axial über.

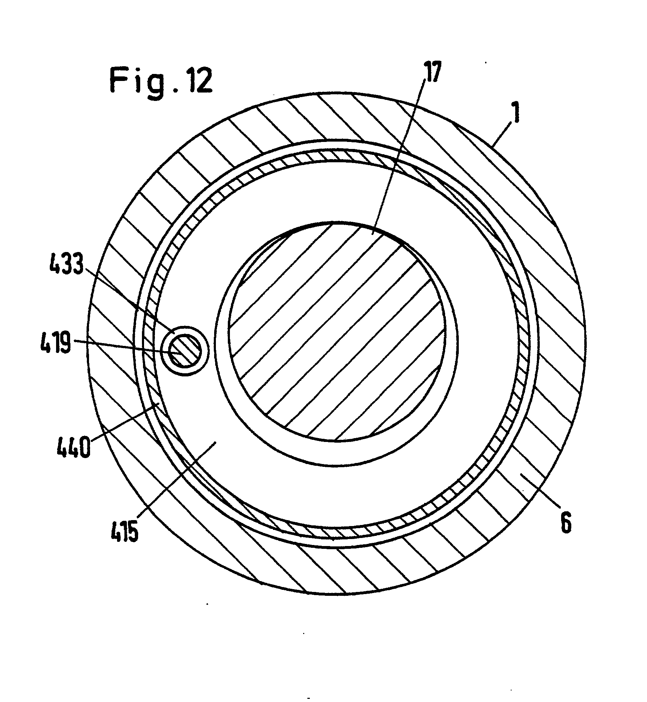

Zwischen dem Ring 434 und dem ihn durchsetzenden Trägerabschnitt 17 besteht ein Spiel $x_1$, das einem maximalen Ringhub entspricht, zwischen dem Ring 434 und dem Rand 440 ein Spiel $x_2$, das einem maximalen Relativhub entspricht, und zwischen der Lagerbuchse 415 und dem Trägerabschnitt 17 ein Spiel $x_3$, das einem maximalen Lagerbuchsenhub entspricht. $x_3$ ist kleiner als die Summe von $x_1 + x_2$, jedoch größer als $x_1$ bzw. $x_2$ allein. Das hat zur Folge, daß in der unteren Endlage des Walzenmantels 6 der Ring 434 auf dem Trägerabschnitt 17 (Fig. 11) und die Lagerbuchse 415 auf dem Trägerabschnitt 17 aufliegt (Fig. 12), zwischen dem Rand 440 und dem Ring 434 aber noch ein kleiner Zwischenraum verbleibt (Fig. 11).

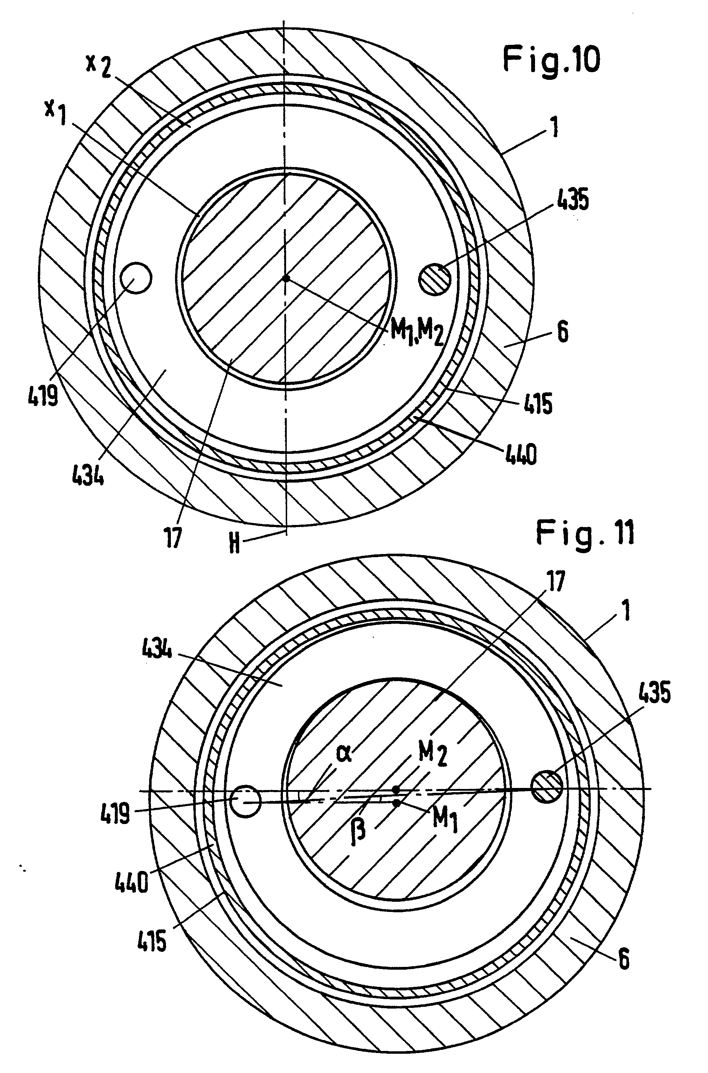

In Fig. 10 ist die Mittelstellung gezeigt, in der die Lagerbuchse 415 den Trägerabschnitt 17 konzentrisch umgibt. Die Achsen $M_1$ der Lagerbuchse 415 und die Achse $M_2$ des Trägerabschnitts 17 fallen zusammen.

In Fig. 11 ist veranschaulichst, wie durch eine doppelte Schwenkbewegung die Achse $M_1$ der Lagerbuchse gegenüber der Achse $M_2$ des Trägerabschnitts nach unten verlagert worden ist. Die Verbindungslinie zwischen Zapfen 419 und 435 ist durch Verschwenken des Ringes 434 um den Zapfen 435 um den Winkel $\alpha$ gedreht worden. Die Verbindungslinie zwischen dem Zapfen 419 und der Achse $M_1$ der Lagerbuchse 415 ist durch Schwenken um den Zapfen 419 um den Winkel $\beta$ gedreht worden. Aufgrund dieser zweifachen Schwenkung ist das Abweichen der Achse $M_1$ aus der Wirkebene H minimal.

Von den dargestellten Ausführungsformen kann in vielfacher Hinsicht abgewichen werden, ohne den Grundgedanken der Erfindung zu verlassen. So können die Lagerelemente 9 eine kreisförmige Lagerfläche besitzen und durch nur einen Druckgeber belastet sein. Als Stützvorrichtung kann auch eine durchgehende, mit Druckflüssigkeit gefüllte Kammer benutzt werden. Für die Regelung stehen die verschiedensten bekannten Prinzipien zur Verfügung. Der Zapfen 19 kann auch an einer drehfest am Träger angebrachten Ringscheibe angebracht sein. In diesem Fall kann der Träger durchgehend gleichen Querschnitt besitzen. Es besteht auch die Möglichkeit, den Zapfen jeweils in der Lagerbuchse zu arretieren und als Schwenklager die Bohrung im Träger, in der Dichtscheibe, im Gleitstein oder im Ring zu verwenden. Bei den Ausführungsformen der Fig. 5 bis 8 kann der Gleitstein auch mit hydrostatischen Lagertaschen auf beiden Seiten ausgestattet sein, denen Druckflüssigkeit zugeführt wird, was die Gefahr einer Reibung bei der Gleitsteinverschiebung noch weiter herabsetzt.

**Patentansprüche**

1. Deformationsregelwalze mit einem drehfest gehaltenen Träger (3, 203, 303, 403), auf dem ein ihn umgebender drehbarer Walzenmantel (6) mit Hilfe einer insbesondere hydrostatische Lagerelemente (9) aufweisenden Stützvorrichtung (8) gelagert ist, wobei die Enden des Walzenmantels (6) über Ringlagern (14) auf Lagerbuchsen (15, 115, 215, 415) angeordnet sind, die gegenüber dem Träger (3, 203, 303, 403) beweglich, aber mit Hilfe von an der Lagerbuchse (15, 115, 215, 415) angreifenden Drehmomentstützen gegen Drehung gesichert sind, dadurch gekennzeichnet, daß die Drehmomentstützen um etwa 90° gegenüber der Stützvorrichtung (8) versetzt sind und je durch mindestens einen Zapfen (19; 119, 119a; 219; 319, 319a; 419, 419a) mit zur Trägerlängserstreckung paralleler Achse zur Schwenklagerung der Lagerbuchse (15; 115; 215; 415) gebildet sind.

2. Deformationsregelwalze nach Anspruch 1, dadurch gekennzeichnet, daß der Zapfen (19; 119, 119a; 219; 319, 319a; 419, 419a) mit dem Träger (3; 203; 303; 403) drehfest verbunden und die Lagerbuchse (15; 115; 215) um den Zapfen schwenkbar ist.

3. Deformationsregelwalze nach Anspruch 1 oder 2, dadurch gekennzeichnet, daß der Zapfen (19; 119; 219; 319; 419) von einer Stufen-Stirnfläche (18; 218; 318; 418) zwischen dem die Lagerbuchse (15; 115; 215; 415) durchsetzenden Trägerabschnitt (17; 217; 417) und einem dickeren Hauptteil des Trägers (3; 203; 303; 403) vorsteht.

4. Deformationsregelwalze nach einem der Ansprüche 1 bis 3, dadurch gekennzeichnet, daß der Zapfen (119a; 319a; 419a) von einer am Träger (3; 203; 303) drehfest gehaltenen, axial außerhalb des Ringlagers (14) angeordneten Dichtscheibe (123, 323; 423) vorsteht.

5. Deformationsregelwalze nach einem der Ansprüche 1 bis 4, dadurch gekennzeichnet, daß zu beiden Seiten des Ringlagers (14) je ein Zapfen (119, 119a; 319, 319a; 419, 419a) in gleichachsiger Anordnung vorgesehen ist.

6. Deformationsregelwalze nach einem der Ansprüche 1 bis 5, dadurch gekennzeichnet, daß die Lagerbuchse (15; 115; 415) zwei Außenflansche (22, 25; 125; 422, 425) aufweist, von denen der eine einteilig mit ihr ausgebildet und der andere mit ihr durch Befestigungsmittel verbunden ist.

7. Deformationsregelwalze nach einem der Ansprüche 1 bis 6, dadurch gekennzeichnet, daß der Zapfen (219; 319, 319a; 419, 419a) auf einer zur Hubrichtung der Stützvorrichtung etwa parallelen Bahn bewegbar ist.

8. Deformationsregelwalze nach Anspruch 7, dadurch gekennzeichnet, daß der Zapfen (219; 319, 319a) von einem Gleitstein (31; 331, 331a) getragen ist, der in einer drehfest am Träger (203; 303) gehaltenen Nut (32; 332, 332a) verschiebbar ist, die außermittig etwa parallel zur Hubrichtung der Stützvorrichtung (8) verläuft.

9. Deformationsregelwalze nach Anspruch 8, dadurch gekennzeichnet, daß die Nut (32; 332, 332a) zur Aufnahme des Gleitsteins (31; 331, 331a) in der Stufen-Stirnfläche des Trägers (203; 303 und/oder in der Dichtscheibe (323) vorgesehen ist.

10. Deformationsregelwalze nach Anspruch 7, dadurch gekennzeichnet, daß der Zapfen (419, 419a) von einem Hebel (434, 434a) getragen ist, der um eine dem Zapfen diametral gegenüberliegende trägerfeste Achse eines zweiten Zapfens (435, 435a) schwenkbar ist.

11. Deformationsregelwalze nach Anspruch 10, dadurch gekennzeichnet, daß der Hebel (435, 435a) zwischen einer Stirnseite (437; 438) der Lagerbuchse (415) und einer Stufen-Stirnfläche (418) des Trägers (403) und/oder der Stirnfläche (439) der Dichtscheibe (423) angeordnet ist.

12. Deformationsregelwalze nach Anspruch 10 oder 11, dadurch gekennzeichnet, daß der Hebel durch einen Ring (434, 434a) gebildet ist, der einen ihn durchsetzenden Trägerabschnitt (17) mit einem solchen Spiel ($x_1$) umgibt, daß der maximale Ringhub kleiner als der maximale Lagerbuchsenhub ist.

13. Deformationsregelwalze nach Anspruch 12, dadurch gekennzeichnet, daß die Lagerbuchse (415) wenigstens an einer Seite einen axial vorspringenden Rand (440) aufweist, der den Ring (434) mit einem solchen Spiel ($x_2$) umgibt, daß der maximale Relativhub zwischen Lagerbuchse und Ring kleiner als der maximale Lagerbuchsenhub ist.

14. Deformationsregelwalze nach den Ansprüchen 12 und 13, dadurch gekennzeichnet, daß die Summe von maximalem Ringhub und maximalem Relativhub größer ist als der maximale Lagerhub.

15. Deformationsregelwalze nach einem der Ansprüche 1 bis 14, gekennzeichnet durch eine am Walzenmantel und/oder an der Lagerbuchse angreifende, hydrostatische Stabilisierungsvorrichtung mit in Richtung der Stützvorrichtung (9) wirkenden Primärelementen (8; 37) und in Gegenrichtung wirkenden Sekundärelementen (33; 38), die durch ihre Spannwirkung zumindest eine unzulässig große Querverlagerung des Walzenmantels verhindern.

16. Deformationsregelwalze nach Anspruch 15, dadurch gekennzeichnet, daß die hydrostatischen Lagerelemente (9) der Stützvorrichtung (8) als Primärelemente dienen.

17. Deformationsregelwalze nach Anspruch 15 oder 16, dadurch gekennzeichnet, daß die Sekundärelemente durch in Gegenrichtung am Walzenmantel angreifende hydrostatische Lagerelemente (38) gebildet sind.

18. Deformationsregelwalze nach einem der Ansprüche 15 bis 17, dadurch gekennzeichnet, daß zumindest als Sekundärelement (33) eine Kolben-Zylinder-Anordnung zwischen Lagerbuchse (215) und dem sie durchsetzenden Trägerabschnitt (217) angeordnet ist.

19. Deformationsregelwalze nach Anspruch 18, dadurch gekennzeichnet, daß ein an der Lagerbuchse (215) fest angebrachter Kolben (34) mit großem Spiel in eine Zylinderbohrung (35) im Trägerabschnitt (217) greift.

20. Deformationsregelwalze nach einem der Ansprüche 1 bis 19, dadurch gekennzeichnet, daß an mindestens einer Stirnseite der Lagerbuchse (15; 115; 215) Gleitelemente (26 bis 30) vorgesehen sind, deren Gesamtfläche erheblich kleiner ist als die stirnseitige Fläche.

21. Deformationsregelwalze nach Anspruch 20, dadurch gekennzeichnet, daß ein Gleitelement (26; 129) durch einen den Zapfen (19; 119, 119a) umgebenden Ring gebildet ist.

22. Deformationsregelwalze nach Anspruch 20 oder 21, dadurch gekennzeichnet, daß einer Stirnseite drei um etwa 120° gegeneinander versetzte Gleitelemente (26, 27, 28) zugeordnet sind.

23. Deformationsregelwalze nach einem der Ansprüche 20 bis 22, dadurch gekennzeichnet, daß die zwischen Lagerbuchse (15; 115) und Dichtscheibe (23; 123) vorgesehenen Gleitelemente (29, 30; 129, 130) innerhalb des zwischen diesen Teilen befindlichen Dichtringes (24) angeordnet sind.

**Revendications**

1. Cylindre à flexion réglable, avec un support (3, 203, 303, 403) maintenu fixe en rotation, sur lequel une enveloppe de cylindre (6) tournante l'entourant est montée à l'aide d'un dispositif d'appui (8) présentant en particulier des éléments de palier (9) hydrostatiques, les extrémités de l'enveloppe de cylindre (6) étant disposées, par l'intermédiaire de paliers annulaires (14), sur des coussinets (15, 115, 215, 415) mobiles par rapport au support (3, 203, 303, 403), mais fixés contre toute rotation à l'aide d'appui de couple de rotation agissant sur le coussinet (15, 115, 215, 415), caractérisé en ce que les appuis de couple de rotation sont décalés d'environ 90° par rapport au dispositif d'appui (8) et sont chacun formé par au moins un tourillon (19; 119, 119a; 219; 319; 319a; 419, 419a) à axe parallèle à la direction longitudinale du support, pour le montage pivotant du coussinet (15; 115; 215; 415)..

2. Cylindre à flexion réglable selon la revendication 1, caractérisé en ce que le tourillon (19; 119, 119a; 319, 319a; 419, 419a) est relié, fixe en rotation, au support (3; 203, 303, 403) et que le coussinet (15; 115; 215) est pivotant autour du tourillon.

3. Cylindre à flexion réglable selon la revendication 1 ou 2, caractérisé en ce que le tourillon (19; 119, 219; 319; 419) est en saillie sur une face frontale étagée (18; 218; 318; 418), entre la partie de support (17; 217; 417) traversant le coussinet (15; 215; 315; 415) et une partie principale du support (3; 203; 303; 403) plus épaisse.

4. Cylindre à flexion réglable selon l'une des revendications 1 à 3, caractérisé en ce que le tourillon (119a; 319a; 419a) est en saillie sur un disque d'étanchéité (123; 323; 423) disposé sur le support (3; 203; 303), maintenu fixe en rotation, situé axialement à l'extérieur du palier annulaire (14).

5. Cylindre à flexion réglable selon l'une des revendications 1 à 4, caractérisé en ce qu'un tourillon (119, 119a; 319, 319a; 419, 419a) est prévu des deux côtés du palier annulaire (14), selon un agencement coaxial.

6. Cylindre à flexion réglable selon l'une des revendications 1 à 5, caractérisé en ce que le coussinet (15; 115; 415) présente deux rebords extérieurs (22, 25; 125; 422; 425), dont l'un est réalisé d'une seule pièce avec lui et l'autre est relié à celui-ci par des moyens de fixation.

7. Cylindre à flexion réglable selon l'une des revendications 1 à 6, caractérisé en ce que le tourillon (219; 319, 319a; 419, 419a), est mobile sur une trajectoire approximativement parallèle à la direction de la course du dispositif d'appui.

8. Cylindre à flexion réglable selon la revendication 7, caractérisé en ce que le tourillon (219; 319, 319a) est porté par un coulisseau (31; 331; 331a) mobile dans une rainure (32; 332, 332a) portée, de manière fixe en rotation, par le support (203; 303) et se développant de manière excentrée, approximativement parallèlement à la direction de course du dispositif d'appui (8).

9. Cylindre à flexion réglable selon la revendication 8, caractérisé en ce que la rainure (32; 332; 332a) est prévue pour recevoir le coulisseau (31; 331; 331a) dans la face frontale étagée du support (203; 303) et/ou dans le disque d'étanchéité (323).

10. Cylindre à flexion réglable selon la revendication 7, caractérisé en ce que le tourillon (419, 419a) est porté par un levier (434, 434a) pivotant autour d'un axe d'un deuxième tourillon (435, 435a) fixe sur le support, diamétralement opposé par rapport au tourillon.

11. Cylindre à flexion réglable selon la revendication 10, caractérisé en ce que le levier (435, 435a) est disposé entre une face frontale (437; 438) du coussinet (415) et une face frontale étagée (418) du support (403) et/ou la face frontale (439) du disque d'étanchéité (423).

12. Cylindre à flexion réglable selon la revendication 10 ou 11, caractérisé en ce que le levier est formé par une bague (434, 434a) entourant une partie de support (17) la traversant avec un jeu ($x_1$) tel que la course maximale d'anneau est inférieure à la course maximale de coussinet.

13. Cylindre à flexion réglable selon la revendication 12, caractérisé en ce que le coussinet (415) présente au moins un bord (440) axialement en saillie sur un côté, entourant l'anneau (434) avec un jeu ($x_2$) tel que la course relative maximale entre coussinet et anneau est inférieure à la course maximale de coussinet.

14. Cylindre à flexion réglable selon les revendications 12 et 13, caractérisé en ce que la somme de la course maximale d'anneau et la course relative maximale sont supérieures à la course maximale de palier.

15. Cylindre à flexion réglable selon l'une des revendications 1 à 14, caractérisé par un dispositif de stabilisation hydrostatique agissant sur l'enveloppe de cylindre et/ou sur le coussinet, avec des éléments primaires (8; 37) agissant en direction du dispositif d'appui (9) et des éléments secondaires (33; 38) agissant dans le sens inverse empêchant par leur action de serrage au moins un déplacement transversal d'importance inadmissible de l'enveloppe de cylindre.

16. Cylindre à flexion réglable selon la revendication 15, caractérisé en ce que les éléments de palier hydrostatiques (9) du dispositif d'appui (8) servent d'éléments primaires.

17. Cylindre à flexion réglable selon la revendication 15 ou 16, caractérisé en ce que les éléments secondaires sont formés par des éléments de palier (38) hydrostatique agissant dans le sens inverse sur l'enveloppe de cylindre.

18. Cylindre à flexion réglable selon l'une des revendications 15 à 17, caractérisé en ce qu'à titre d'élément secondaire (33), au moins un agencement piston-cylindre est disposé entre coussinet (215) et la partie de support (217) la traversant.

19. Cylindre à flexion réglable selon la revendication 18, caractérisé en ce qu'un piston (34) monté rigidement sur le coussinet (215) agit avec un jeu important dans un alésage cylindrique (35) situé dans la partie de support (217).

20. Cylindre à flexion réglable selon l'une des revendications 1 à 19, caractérisé en ce que des éléments glissants (26 à 30) sont prévus sur au moins une face frontale du coussinet (15; 115; 215), éléments dont la surface totale est sensiblement inférieure à la surface de la face située côté frontal.

21. Cylindre à flexion réglable selon la revendication 20, caractérisé en ce qu'un élément glissant (26; 129) est formé par un anneau entourant le tourillon (19; 119, 119a).

22. Cylindre à flexion réglable selon la revendication 20 ou 21, caractérisé en ce que trois éléments glissants (26, 27, 28) décalés d'environ 120° sont affectés à une face frontale.

23. Cylindre à flexion réglable selon l'une des revendications 20 à 22, caractérisé en ce que les éléments glissants (29, 30; 129, 130) prévus entre coussinet (15; 115) et disque d'étanchéité (23; 123) sont disposés à l'intérieur de l'anneau d'étanchéité (24) se trouvant entre ces parties.

**Claims**

1. Controlled-deflection roll, comprising a bearer (3; 203, 303, 403) which is held rotationally fast and on which a rotatable roll shell (6) surrounding it is mounted by means of a supporting device (8) having in particular hydrostatic bearing elements (9), the ends of the roll shell (6) being arranged via annular bearings (14) on bearing bushes (15, 115, 215, 415) which are movable relative to the bearer (3, 203, 303, 403) but are secured against rotation by means of torque supports acting on the bearing bush (15, 115, 215, 415), characterized in that the torque supports are offset by about 90° relative to the supporting device (8) and are each formed by at least one pin (19; 119, 119a; 219; 319, 319a; 419, 419a) having an axis parallel to the longitudinal extension of the bearer to pivotably mount the bearing bush (15; 115; 215; 415).

2. Controlled-deflection roll according to Claim 1, characterized in that the pin (19; 119, 119a; 219; 319; 319a; 419, 419a) is connected rotationally fast to the bearer (3; 203; 303; 403) and the bearing bush (15; 115; 215) is pivotable about the pin.

3. Controlled-deflection roll according to Claim 1 or 2, characterized in that the pin (19; 119; 219; 319; 419) protrudes from a stepped end face (18; 218; 318; 418) between the bearer section (17; 217; 417) passing through the bearing bush (15; 115; 215; 415) and a thicker main part of the bearer (3; 203; 303; 403).

4. Controlled-deflection roll according to any of Claims 1 to 3, characterized in that the pin (119a; 319a; 419a) protrudes from a sealing disc (123; 323; 423) held rotationally fast on the bearer (3; 203; 303) and arranged axially outside the annular bearing (14).

5. Controlled-deflection roll according to any of Claims 1 to 4, characterized in that one pin (119, 119a; 319, 319a; 419, 419a) each is provided in coaxial arrangement on both sides of the annular bearing (14).

6. Controlled-deflection roll according to any of Claims 1 to 5, characterized in that the bearing bush (15; 115; 415) has two external flanges (22, 25; 125; 422, 425), of which one is formed in one piece with it and the other is connected to it by fixing means.

7. Controlled-deflection roll according to any of Claims 1 to 6, characterized in that the pin (219; 319, 319a; 419, 419a) is movable on a path approximately parallel to the lifting direction of the supporting device.

8. Controlled-deflection roll according to Claim 7, characterized in that the pin (219; 319, 319a) is carried by a sliding block (31; 331, 331a) which is displaceable in a groove (32; 332, 332a) which is held rotationally fast on the bearer (203; 303) and runs eccentrically approximately parallel to the lifting direction of the supporting device (8).

9. Controlled-deflection roll according to Claim 8, characterized in that the groove (32; 332, 332a) for accommodating the sliding block (31; 331, 331a) is provided in the stepped end face of the bearer (203; 303) and/or in the sealing disc (323).

10. Controlled-deflection roll according to Claim 7, characterized in that the pin (419, 419a) is carried by a lever (434, 434a) which is pivotable about an axis, diametrically opposite the pin and fixed relative to the bearer, of a second pin (435, 435a).

11. Controlled-deflection roll according to Claim 10, characterized in that the lever (435, 435a) is arranged between an end face (437; 438) of the bearing bush (415) and a stepped end face (418) of the bearer (403) and/or the end face (439) of the sealing disc (423).

12. Controlled-deflection roll according to Claim 10 or 11, characterized in that the lever is formed by a ring (434, 434a) which surrounds a bearer section (17), passing through it, with such a clearance $(x_1)$ that the maximum ring lift is smaller than the maximum lift of the bearing bush.

13. Controlled-deflection roll according to Claim 12, characterized in that the bearing bush (415), at least on one side, has an axially protruding rim (440) which surrounds the ring (434) with such a clearance $(x_2)$ that the maximum relative lift between bearing bush and ring is smaller than the maximum lift of the bearing bush.

14. Controlled-deflection roll according to Claims 12 and 13, characterized in that the sum of maximum ring lift and maximum relative left is greater than the maximum bearing lift.

15. Controlled-deflection roll according to any of Claims 1 to 14, characterized by a hydrostatic stabilizing device which acts on the roll shell and/or on the bearing bush and has primary elements (8; 37) acting in the direction of the supporting device (9) and secondary elements (33; 38) acting in the opposite direction which, by their clamping action, prevent at least an inadmissibly large transverse displacement of the roll shell.

16. Controlled-deflection roll according to Claim 15, characterized in that the hydrostatic bearing elements (9) of the supporting device (8) serve as primary elements.

17. Controlled-deflection roll according to Claim 15 or 16, characterized in that the secondary elements are formed by hydrostatic bearing elemts (38) acting on the roll shell in the opposite direction.

18. Controlled-deflection roll according to any of Claims 15 to 17, characterized in that a piston cylinder arrangement is arranged at least as a secondary element (33) between bearing bush (215) and the bearer section (217) passing through the latter.

19. Controlled-deflection roll according to Claim 18, characterized in that a piston (34) firmly attached to the bearing bush (215) engages with large clearance into a cylinder bore (35) in the bearer section (217).

20. Controlled-deflection roll according to any of Claims 1 to 19, characterized in that sliding elements (26 to 30) are provided on at least one end face of the bearing bush (15; 115; 215), the overall area of which sliding elements (26 to 30) is considerably smaller than the area of the end face.

21. Controlled-deflection roll according to Claim 20, characterized in that one sliding element (26; 129) is formed by a ring surrounding the pin (19; 119, 119a).

22. Controlled-deflection roll according to Claim 20 or 21, characterized in that three sliding elements (26, 27, 28) offset by about 120° relative to one another are allocated to one end face.

23. Controlled-deflection roll according to any of Claims 20 to 22, characterized in that the sliding elements (29, 30; 129, 130) provided between bearing bush (15, 115) and sealing disc (23; 123) are arranged inside the sealing ring (24) located between these parts.

# Fig.1

EP 0 256 465 B1

Fig. 2

Fig. 3

# Fig.4

# Fig. 5

# Fig.6

**Fig.7**

# Fig. 8

Fig.9

Fig.10

Fig.11

Fig.12